(19) Europäisches Patentamt
European Patent Office
Office européen des brevets

(11) **EP 4 783 701 A1**

(12) **EUROPEAN PATENT APPLICATION**
published in accordance with Art. 153(4) EPC

(43) Date of publication:
**29.07.2026 Bulletin 2026/31**

(21) Application number: **23954765.6**

(22) Date of filing: **04.10.2023**

(51) International Patent Classification (IPC):
***H04W 72/23*** (2023.01)

(52) Cooperative Patent Classification (CPC):
**H04W 72/23**

(86) International application number:
**PCT/JP2023/036284**

(87) International publication number:
**WO 2025/074554 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.
Tokyo 100-6150 (JP)**

(72) Inventors:
- **OKAMURA Masaya
  Tokyo 100-6150 (JP)**
- **SHIMA Kousuke
  Tokyo 100-6150 (JP)**
- **MATSUMURA Yuki
  Tokyo 100-6150 (JP)**
- **ECHIGO Haruhi
  Tokyo 100-6150 (JP)**

(74) Representative: **Hoffmann Eitle
Patent- und Rechtsanwälte PartmbB
Arabellastraße 30
81925 München (DE)**

(54) **TERMINAL**

(57) A terminal includes a reception unit that receives a reference signal in a cell formed by a base station, and a control unit that assumes that the reference signal is configured for each group in the cell, wherein the control unit assumes that the group is configured based on information related to an antenna port for receiving the reference signal.

FIG. 6

**Description**

TECHNICAL FIELD

The present disclosure relates to a terminal that receives a reference signal.

BACKGROUND ART

The 3rd Generation Partnership Project (3GPP) has specified the 5th generation mobile communication system (also referred to as 5G, New Radio (NR), or Next Generation (NG)), and is also proceeding with the specification of a next generation mobile communication system called Beyond 5G, 5G Evolution, or 6G.

In the 6G radio communication system that will start in the future, realization of ultra-highspeed and large-capacity communication and ultra-massive connectivity exceeding those of 5G is expected (Non-Patent Literature 1). In order to realize minimum quality assurance in such requirements, it is necessary to secure even more resources.

CITATION LIST

NON-PATENT LITERATURE

Non-Patent Literature 1: NTT DOCOMO, "DOCOMO 6G White Paper, Version 5.0", [online], November 2022, [Searched on September 28, 2023], Internet <URL: https://www.docomo.ne.jp/binary/pdf/corporate/technology/white paper_6g/DOCOMO_6G_ White_PaperJP_20221116.pdf>

SUMMARY OF INVENTION

In 5G, a reference signal (RS) received by a terminal (User Equipment, UE) from a base station (gNodeB, gNB) for performing channel demodulation or Channel State Information (CSI) estimation is specified as a UE specific RS in order to realize flexible RS mapping and transmission with a higher number of layers by Multiple Input Multiple Output (MIMO).

Here, in order to make resources for RS (hereinafter also referred to as RS resources) common resources among UEs, it is conceivable to specify the RS as a cell specific RS. By doing this, since RS resources are shared among UEs, it is considered possible to secure resources used for other channels.

However, if the RS is specified as a Cell specific RS, this RS will be transmitted to all UEs in the cell. At this time, since the RS resources are configured for a UE with a large number of antenna ports (hereinafter also referred to as the number of layers or the number of streams), wasted RS resources that cannot be used occur for a UE with a small number of antenna ports. For example, when RS resources are configured for a UE with 4 antenna ports, RS resources for 2 antenna ports are wasted for a UE with 2 antenna ports.

It is considered that such a problem is caused by differences not only in the number of antenna ports but also in information related to antenna ports (for example, which antenna port is used, availability of MIMO support) among UEs in the cell.

Therefore, the present disclosure has been made in view of such a situation, and an object thereof is to provide a terminal capable of suppressing waste of RS resources even in a cell where terminals with different information related to antenna ports coexist.

An aspect of the disclosure is a terminal including a reception unit (radio signal transmission/reception unit 210) configured to receive a reference signal in a cell formed by a base station, and a control unit (control unit 270) configured to assume that the reference signal is configured for each group in the cell, wherein the control unit assumes that the group is configured based on information related to an antenna port for receiving the reference signal.

BRIEF DESCRIPTION OF DRAWINGS

[Fig. 1] Fig. 1 is a diagram showing an overall schematic configuration of a radio communication system.
[Fig. 2] Fig. 2 is a diagram showing frequency ranges used in the radio communication system.
[Fig. 3] Fig. 3 is a diagram showing a configuration example of a radio frame, a subframe, a slot, and a symbol used in the radio communication system.
[Fig. 4] Fig. 4 is a functional block diagram of a terminal.
[Fig. 5] Fig. 5 is a functional block diagram of a base station.

[Fig. 6] Fig. 6 is a diagram showing an example of configuration for each group in a cell.

[Fig. 7] Fig. 7 is a diagram showing an example of configuration for each cell.

[Fig. 8] Fig. 8 is a diagram showing an example of a relationship among the number of antenna ports of a terminal, the number of ports for receiving a group specific RS, and the number of ports for receiving a UE specific RS.

[Fig. 9] Fig. 9 is a diagram showing an example of hardware configurations of the base station and the terminal.

[Fig. 10] Fig. 10 is a diagram showing a configuration example of a vehicle.

DESCRIPTION OF EMBODIMENTS

Hereinafter, embodiments will be described based on the drawings. Note that the same functions or configurations are denoted by the same or similar reference numerals, and description thereof will be omitted as appropriate.

(1) Configuration of Radio Communication System

(1.1) Overall Configuration

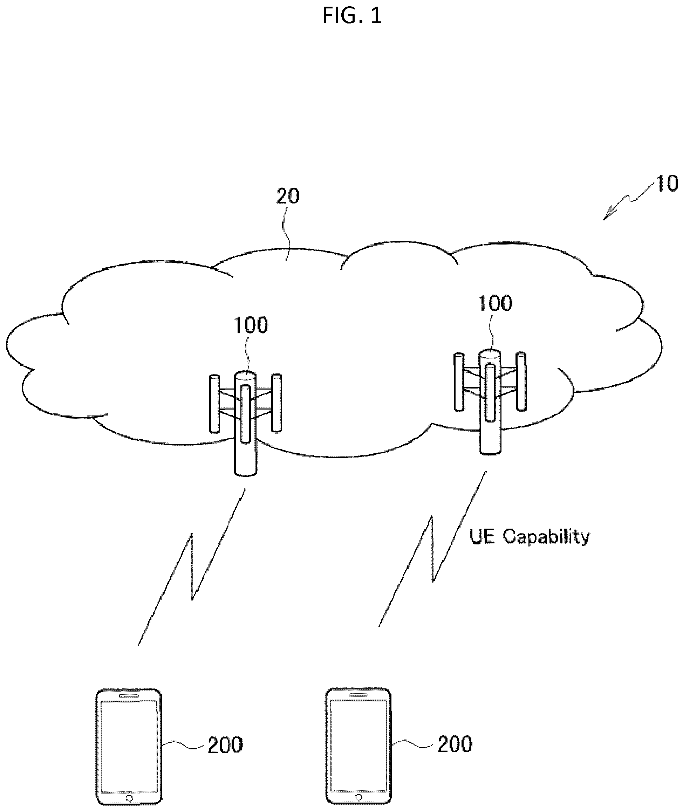

A radio communication system 10 shown in Fig. 1 is a radio communication system according to a method called 5G. On the other hand, the radio communication system 10 may be a radio communication system according to a method called Beyond 5G, 5G Evolution, or 6G.

The radio communication system 10 can support Massive Multiple-Input Multiple-Output (Massive MIMO) that generates a beam with higher directivity by controlling radio signals transmitted from a plurality of antenna elements, Carrier Aggregation (CA) that bundles and uses a plurality of component carriers (CCs), Dual Connectivity (DC) that performs simultaneous communication with two base stations, and the like.

As shown in Fig. 1, the radio communication system 10 includes a Next Generation-Radio Access Network (NG-RAN) 20, a base station (next Generation NodeB, gNB) 100 connected to the NG-RAN 20, and a terminal (User Equipment, UE) 200 that performs radio communication with the gNB 100. The NG-RAN 20 is connected to a core network (CN) (not shown). The NG-RAN 20 and the CN may be simply expressed as a "network". Further, the gNB 100 may be understood to be included in the network. Note that the specific configuration of the radio communication system 10, for example, the numbers of gNBs 100 and UEs 200, is not limited to the example shown in Fig. 1.

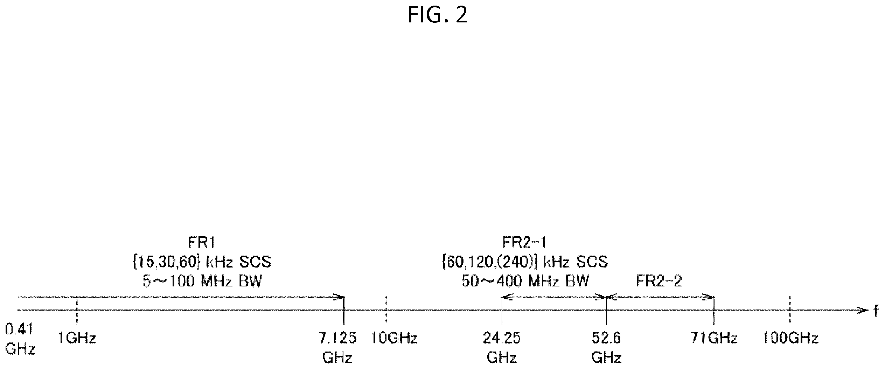

Further, the radio communication system 10 may support a plurality of frequency ranges (FRs). That is, as shown in Fig. 2, the radio communication system 10 may support the following FRs.

- FR1: 410 MHz to 7.125 GHz
- FR2-1: 24.25 GHz to 52.6 GHz
- FR2-2: Exceeding 52.6 GHz to 71 GHz

In FR1, a Sub-Carrier Spacing (SCS) of 15, 30, or 60 kHz and a Bandwidth (BW) of 5 to 100 MHz may be used. In FR2-1, an SCS of 60 or 120 kHz (240 kHz may be included) and a BW of 50 to 400 MHz may be used.

In FR2-2, Cyclic Prefix-Orthogonal Frequency Division Multiplexing (CP-OFDM) or Discrete Fourier Transform-Spread-Orthogonal Frequency Division Multiplexing (DFT-S-OFDM) having a larger SCS may be applied in order to avoid an increase in phase noise.

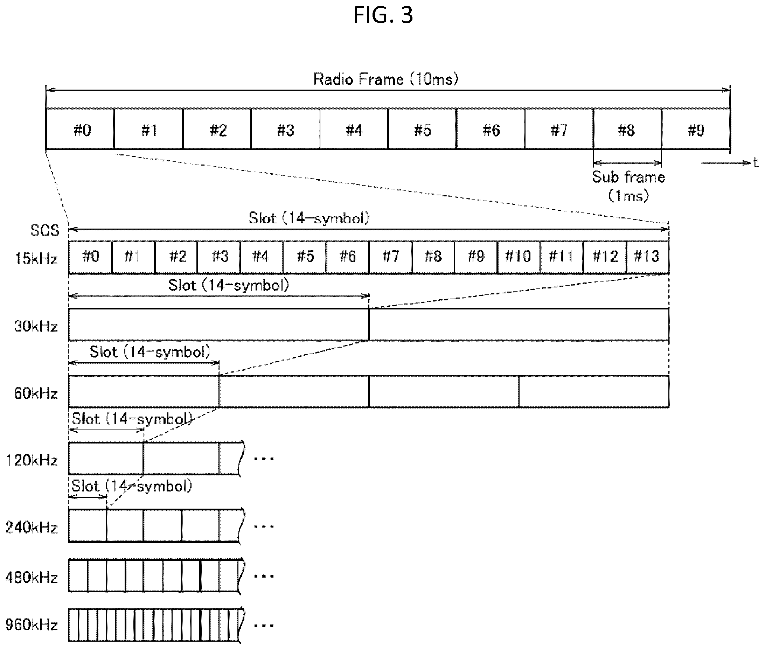

Further, as shown in Fig. 3, one slot in the radio communication system 10 is composed of 14 symbols. When this configuration is maintained, the larger (wider) the SCS, the shorter the symbol period (and the slot period). Note that the SCS is not limited to the frequencies shown in Fig. 3, and may be a frequency such as 480 kHz or 960 kHz, for example.

Further, the number of symbols constituting one slot does not necessarily have to be 14 symbols, and may be, for example, 28 or 56 symbols. Furthermore, the number of slots per subframe may vary depending on the SCS.

(2) Functional Block Configuration of Radio Communication System

(2.1) Functional Block Configuration of Terminal

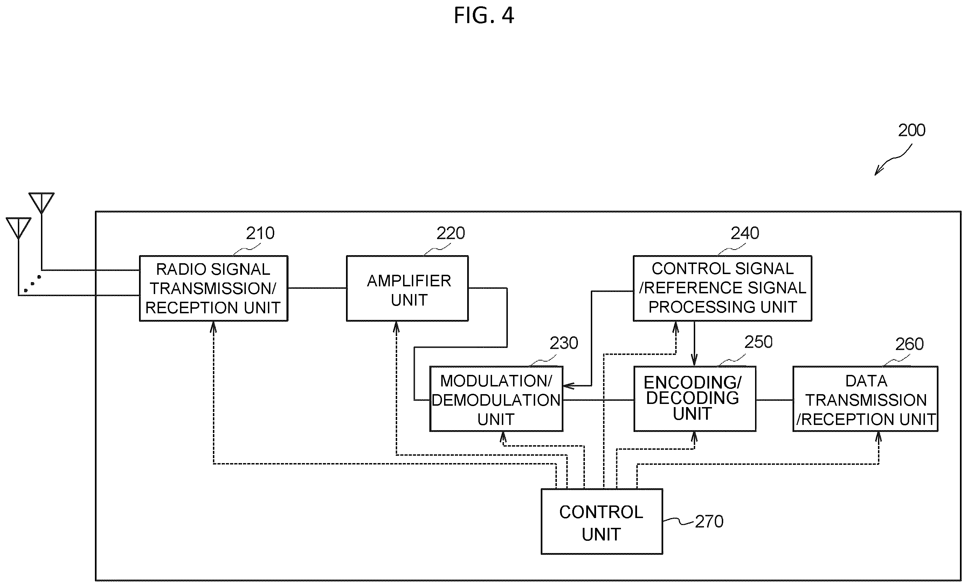

As shown in Fig. 4, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

The radio signal transmission/reception unit 210 transmits and receives radio signals to and from the gNB 100. The radio signal transmission/reception unit 210 may constitute a transmitter that transmits radio signals to the gNB 100 and a receiver that receives radio signals from the gNB 100.

The radio signal transmission/reception unit 210 of the embodiment receives a reference signal (RS) from the gNB 100 in a cell formed by the gNB 100. The RS may include, for example, a Demodulation RS (DMRS) used for channel demodulation, and a CSI-RS used for Channel State Information (CSI) estimation. The channel may be a control channel or a data channel. The reference signal and the channel are not limited to these, and may be those described later.

The radio signal transmission/reception unit 210 of the embodiment can receive a plurality of RSs. For example, it is possible to receive an RS in each of an X-th symbol and a Y-th symbol among a plurality of continuous symbols. Further, when the RS is a DMRS, a front-loaded RS and an additional RS can be received. The front-loaded RS is an RS arranged in a head symbol of a data channel, and the additional RS is an RS additionally arranged in a symbol backward of the front-loaded RS.

The amplifier unit 220 is composed of a Power Amplifier (PA)/Low Noise Amplifier (LNA) and the like. The amplifier unit 220 amplifies the radio signal output from the radio signal transmission/reception unit 210. Further, the amplifier unit 220 amplifies the radio signal output from the modulation/demodulation unit 230.

The modulation/demodulation unit 230 executes data modulation/demodulation, transmission power setting, resource block allocation, and the like for each predetermined communication destination (gNB 100 or another gNB). In the modulation/demodulation unit 230, CP-OFDM/DFT-S-OFDM may be applied. Further, DFT-S-OFDM may be used not only for Uplink (UL) but also for Downlink (DL).

The control signal/reference signal processing unit 240 executes processing related to control signals transmitted and received to and from the gNB 100, for example, Radio Resource Control (RRC) signaling.

The control signal/reference signal processing unit 240 executes processing related to reference signals transmitted and received to and from the gNB 100, for example, Demodulation Reference Signal (DMRS), Phase Tracking Reference Signal (PTRS), Channel State Information-Reference Signal (CSI-RS), Sounding Reference Signal (SRS), and Positioning Reference Signal (PRS).

Note that the channel includes a control channel and a data channel. The control channel includes a Physical Uplink Control Channel (PUCCH), a Physical Downlink Control Channel (PDCCH), a Physical Random Access Channel (PRACH), a Physical Broadcast Channel (PBCH), and the like. The data channel includes a Physical Uplink Shared Channel (PUSCH), a Physical Downlink Shared Channel (PDSCH), and the like.

The encoding/decoding unit 250 executes division/concatenation and coding/decoding of data included in radio signals for each predetermined communication destination (gNB 100 or another gNB).

Specifically, the encoding/decoding unit 250 decodes data output from the modulation/demodulation unit 230, and concatenates the decoded data. Further, the encoding/decoding unit 250 divides data output from the data transmission/reception unit 260 into a predetermined size, and executes coding on the divided data.

The data transmission/reception unit 260 executes assembly/disassembly of data units (Protocol Data Unit (PDU)/Service Data Unit (SDU)) constituting data, and the like between respective layers. The plurality of layers are a Medium Access Control (MAC) layer, a Radio Link Control (RLC) layer, a Packet Data Convergence Protocol (PDCP) layer, and the like. Further, the data transmission/reception unit 260 executes data error correction and retransmission control based on Hybrid Automatic Repeat Request (HARQ).

The control unit 270 controls the UE 200. The control unit 270 controls, for example, transmission and reception of radio signals by the radio signal transmission/reception unit 210, amplification by the amplifier unit 220, data modulation/demodulation by the modulation/demodulation unit 230, signal processing by the control signal/reference signal processing unit 240, coding/decoding by the encoding/decoding unit 250, and assembly/disassembly of data units by the data transmission/reception unit 260.

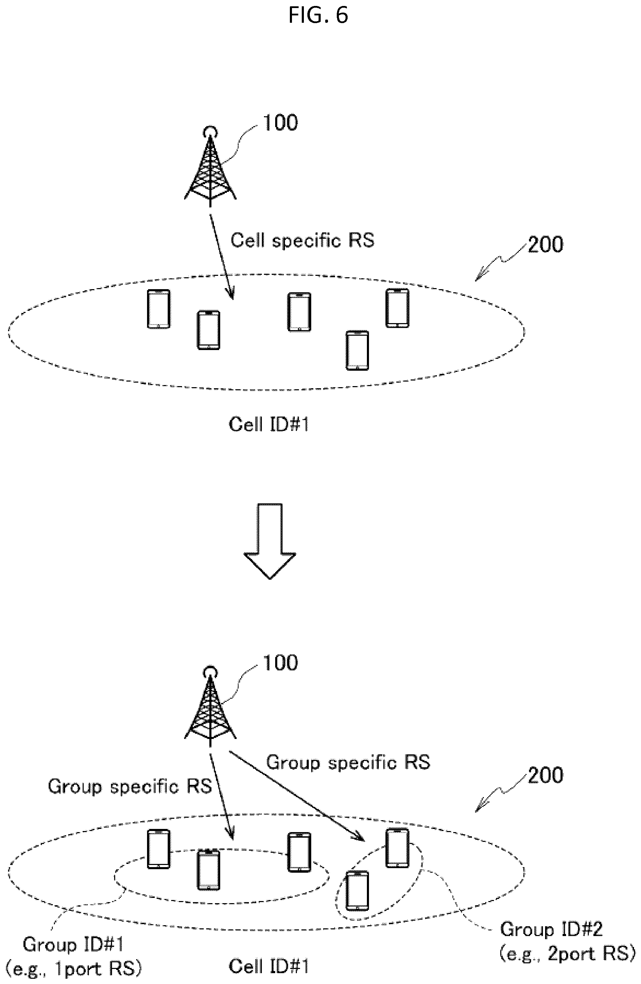

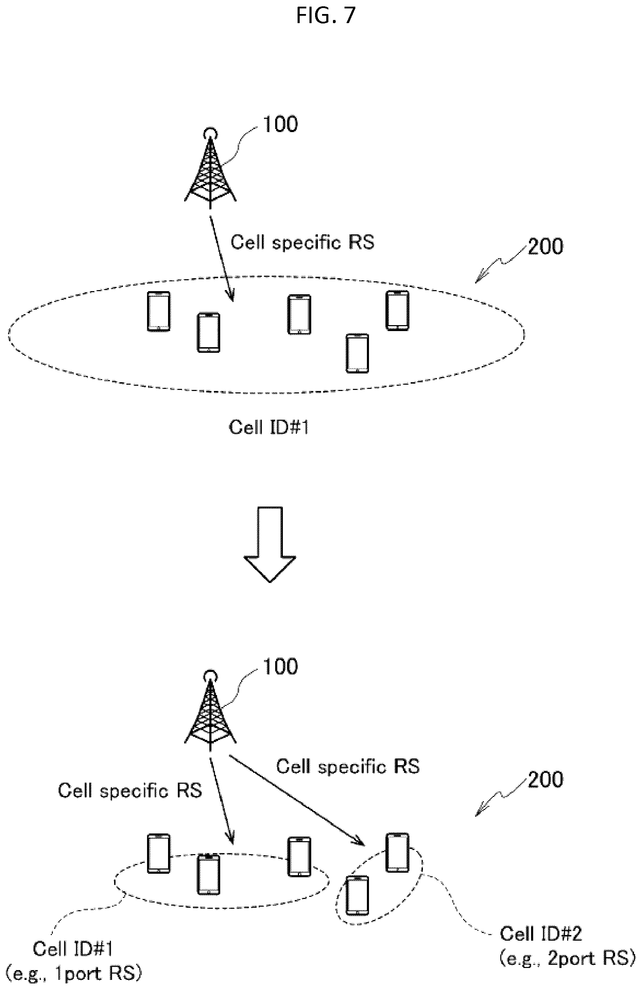

The control unit 270 of the embodiment assumes that an RS is configured for each group configured in a cell formed by the gNB 100. Such an RS may be referred to as a group specific RS (see Fig. 6). Note that an RS configured for each cell formed by the gNB 100 may be referred to as a cell specific RS (see Figs. 6 and 7), and an RS configured for each UE may be referred to as a UE specific RS.

The control unit 270 of the embodiment assumes that the above-described group is configured based on information related to an antenna port for receiving the RS. The information related to an antenna port for receiving the RS may be the number of antenna ports for receiving the RS. Further, the information related to an antenna port for receiving the RS may be information on which antenna port is used to receive the RS (for example, transmitted precoding matrix indicator (TPMI)), or may be availability of MIMO support realized using a plurality of antenna ports (for example, whether or not parameters for MIMO are configured).

The control unit 270 of the embodiment may assume that a precoder applied to communication with the gNB 100 is common (the same) among the UEs 200 in the above-described group, or may assume that it is different among the UEs 200 in the above-described group.

When the radio signal transmission/reception unit 210 receives a plurality of RSs, the control unit 270 of the embodiment may assume that a part of the plurality of RSs is configured for each of the above-described groups, and the rest of the plurality of RSs is configured for each UE 200. For example, when the radio signal transmission/reception unit 210 receives three DMRSs (for example, a front-loaded RS and two additional RSs), it may be assumed that the front-loaded RS is configured for each of the above-described groups, and the two additional RSs are configured for each UE 200.

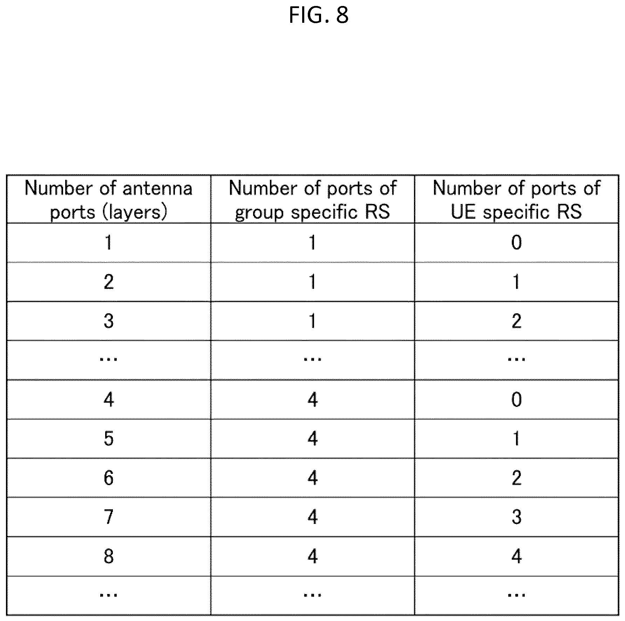

The control unit 270 of the embodiment may assume that the number of antenna ports for receiving the RS configured for each UE 200 is determined based on the number of antenna ports for receiving the RS configured for each of the above-described groups and the total number of antenna ports (see Fig. 8).

(2.2) Functional Block Configuration of Base Station

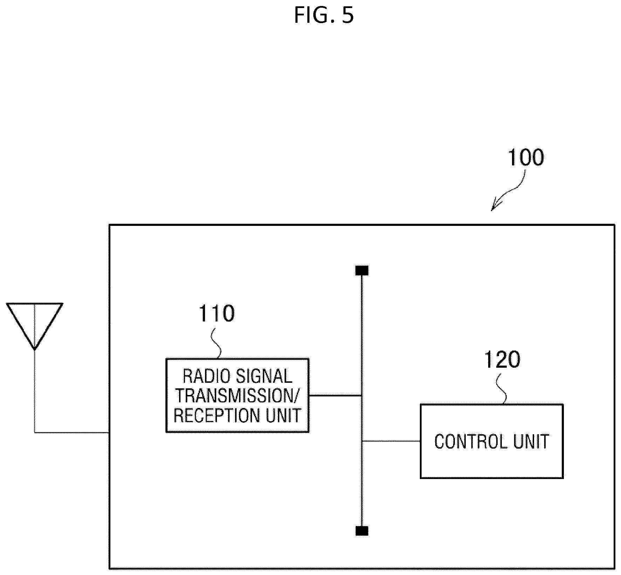

As shown in Fig. 5, the gNB 100 includes a radio signal transmission/reception unit 110 and a control unit 120.
The radio signal transmission/reception unit 110 transmits and receives radio signals to and from the UE 200. The radio signal transmission/reception unit 110 may constitute a transmitter that transmits radio signals to the UE 200 and a receiver that receives radio signals from the UE 200.
The radio signal transmission/reception unit 110 of the embodiment transmits the above-described reference signal to the UE 200 in a cell formed by the gNB 100.
The control unit 120 controls the gNB 100. The control unit 120 controls, for example, transmission and reception of radio signals by the radio signal transmission/reception unit 110. Further, the control unit 120 executes scheduling for the UE 200.
The control unit 120 of the embodiment configures the plurality of groups described above in a cell formed by the gNB 100.

(3) Operation of Radio Communication System

(3.1) Issues

If the RS is specified as a cell specific RS, this RS will be transmitted to all UEs in the cell. At this time, since the RS resources are configured for a UE with a large number of antenna ports (hereinafter also referred to as the number of layers or the number of streams), wasted RS resources that cannot be used occur for a UE with a small number of antenna ports. For example, when RS resources are configured for a UE with 4 antenna ports, RS resources for 2 antenna ports are wasted for a UE with 2 antenna ports.
It is considered that such a problem is caused by differences not only in the number of antenna ports but also in information related to antenna ports (for example, which antenna port is used, availability of MIMO support) among UEs in the cell.

(3.2) Operation Examples

(3.2.1) Operation Example 1

The UE 200 may assume that the DMRS used for demodulation of a data channel is configured for each group. Note that the channel and the RS are examples, and other channels and RSs may be used. Further, "for each group" may be read as "on a group basis" or "group specific", and "RS configured for each group" may be read as "group specific RS".
As shown in Fig. 6, the gNB 100 may configure a group ID in addition to a cell ID for the UE 200 in the cell formed by the gNB 100 itself. By being configured with the group ID, the UE 200 assumes that the RS is configured for each group in the cell to which the UE 200 belongs. Note that, in the present specification, "RS is configured" may be read as "RS resource is configured", and "resource" is not limited to that in the frequency direction, and may be understood to include that in the time direction, the spatial direction, and the like.
The group ID may be configured based on the number of antenna ports (number of layers) with which the UE 200 receives the RS. For example, it may be configured based on the number of antenna ports for receiving the DMRS used for demodulation of the data channel. Fig. 6 shows an example in which different group IDs are assigned (grouped) for a UE 200 with one antenna port and a UE 200 with two antenna ports.
This enables RS configuration according to the number of antenna ports of the UE 200, so that it is possible to suppress configuration of RS resources that are wasted for a user with a small number of antenna ports.
Note that, when the group ID is not configured, the UE 200 may assume that the DMRS used for demodulation of the data channel is not configured. In this case, it may be assumed that not only the group specific DMRS but also the UE specific DMRS is not configured.

(3.2.2) Operation Example 2

The UE 200 may assume that the DMRS used for demodulation of a data channel is configured for each cell. Note that the channel and the RS are examples, and other channels and RSs may be used. Further, "for each cell" may be read as "on a cell basis" or "cell specific", and "RS configured for each cell" may be read as "cell specific RS".

As shown in Fig. 7, the gNB 100 may (re)configure a cell ID for the UE 200 in the cell formed by the gNB 100 itself. By being configured with the cell ID, the UE 200 assumes that the RS is configured for each cell to which the UE 200 belongs.

The cell ID may be configured based on the number of antenna ports (number of layers) with which the UE 200 receives the RS. For example, it may be configured based on the number of antenna ports for receiving the DMRS used for demodulation of the data channel. Fig. 7 shows an example in which different cell IDs are assigned for a UE 200 with one antenna port and a UE 200 with two antenna ports.

The assignment of cell IDs according to the number of antenna ports may be more generalized such that cell ID #a is assigned to a UE 200 whose number of antenna ports for receiving the RS is X, cell ID #b is assigned to a UE 200 whose number of antenna ports for receiving the RS is X+1, and so on. Further, cell ID #a may be assigned to a UE 200 whose number of antenna ports for receiving the RS is X to Y (e.g., X=1, Y=4). Note that X and Y may be uniquely determined by specifications, or may be configured/updated/indicated by RRC/MAC CE/DCI from the network.

This enables RS configuration according to the number of antenna ports of the UE 200, so that it is possible to suppress configuration of RS resources that are wasted for a user with a small number of antenna ports.

(3.2.3) Operation Example 3

The UE 200 may assume that the DMRS used for demodulation of a data channel is configured by combining the group specific RS of Operation Example 1 and an RS configured for each terminal (UE specific RS). Further, the UE 200 may assume that the DMRS used for demodulation of a data channel is configured by combining the cell specific RS of Operation Example 2 and a UE specific RS.

For example, a group specific RS and a UE specific RS may be configured in a specific symbol/slot/subframe. Further, it may be uniquely specified by specifications.

- Example 1: The front-loaded RS may be configured as a group specific RS, and the additional RS may be configured as a UE specific RS. In this case,
- Example 2: An RS of an X-th symbol may be configured as a group specific RS, and an RS of a Y-th symbol may be configured as a UE specific RS.

Furthermore, the following options may be assumed.

- Opt. 1: The group specific RS is always 1-antenna port transmission (1-layer transmission). In this case, no wasted RS resource occurs for the UE 200 with one antenna port.
- Opt. 2: The number of transmission antenna ports of the group specific RS is configured by the network (gNB 100). In this case, the RS can be flexibly configured according to the number of antenna ports of the UE 200.

(3.2.4) Operation Example 4

The UE 200 may determine the number of antenna ports for receiving the UE specific RS based on the number of antenna ports for receiving the group specific RS and the number of reception antenna ports, that is, the total number of antenna ports. For example, it may be uniquely determined based on a table as shown in Fig. 8. The table shown in Fig. 8 may be read as the following formula.

Number of antenna ports for receiving UE specific RS = Number of reception antenna ports - Number of antenna ports for receiving group specific RS

The table and formula shown in Fig. 8 are examples, and for example, the following formula may be applied in determining the number of antenna ports for receiving the UE specific RS.

Number of antenna ports for receiving UE specific RS = (Number of reception antenna ports - 1) - Number of antenna ports for receiving group specific RS

(3.2.5) Precoder

The UE 200 may assume that the precoder in the group in the above-described operation examples is common (the same) among the UEs 200 in the group. For example, the UE 200 may assume that a common RS in the group (for example, DMRS used for demodulation of a data channel) and a downlink channel (for example, PDSCH/PDCCH) are in a Quasi-Co-Location (QCL) relationship (the same precoder is applied to both). Note that "being in a QCL relationship" may be read as "Transmission Configuration Indicator (TCI) states are the same" or "spatial relations are the same".

This makes it possible to reduce resources for notifying the precoder for each UE 200.

Note that, in this case, a different precoder may be indicated for each UE 200 by MAC CE/DCI.

On the other hand, the UE 200 may assume that the precoder in the group in the above-described operation examples is different among the UEs 200 in the group. As a premise, it is assumed that the gNB 100 notifies the precoder for each UE 200. Further, it is assumed that a precoder different from the precoder notified for each UE 200 is applied to the common RS in the group.

For example, the UE 200 may assume that the UE specific RS is received after the precoder notified from the gNB 100 is applied to an antenna port for receiving the common RS in the group (for example, DMRS used for demodulation of a data channel). Thereby, the UE 200 may assume that the UE specific RS and the downlink channel (for example, PDSCH/PDCCH) are in a Quasi-Co-Location (QCL) relationship.

Alternatively, the UE 200 may assume that the downlink channel (for example, PDSCH/PDCCH) is received after the precoder notified from the gNB 100 is applied to an antenna port for receiving the common RS in the group (for example, DMRS used for demodulation of a data channel).

This makes it possible to reduce the number of bits of the Precoder indication compared to the cell specific RS of LTE.

Note that one precoder may be configured for each group, or a plurality of precoders may be configured. When a plurality of precoders are configured, the UE 200 may select one of them and transmit a PMI related to the selected precoder to the network (gNB 100). Further, when the network (gNB 100) notifies the UE 200 of a plurality of groups, the UE 200 may select one group (or a PMI linked to the group) among them and report the selected group to the network.

Note that whether the UE 200 assumes that the precoder is the same or different in the group may be switched by RRC.

(4) Functions and Effects

According to the above-described embodiment, in a radio communication system, it is possible not only to maximize channel resources by configuring a common RS in a cell, but also to reduce RS resources that are wasted for a terminal with a small number of antenna ports in the configuration of the common RS. This can contribute to minimum quality assurance such as throughput.

(5) Other Embodiments

Although the contents of the present invention have been described by way of the embodiments, it is obvious to those skilled in the art that the present invention is not limited to what is written here and that various modifications and improvements thereof are possible.

In the above-described disclosure, the RS has been described mainly as a DMRS used for demodulation of a data channel, but it is not limited to this. For example, the RS may be a CSI-RS or SRS used for CSI measurement. Also, the RS may be a CSI-RS or a Synchronization Signal/Physical Broadcast Channel Block (SSB) used for Radio Resource Management (RRM) measurement. Note that since SSB is used for measurement in NR, it is assumed to be read as RS.

In the above-described disclosure, "number of layers" may be read as "number of ranks". Also, "group specific" may be read as terms such as "semi-cell specific", "group-based", or "common". Also, "data channel" may be understood to include not only the above-described "PDSCH" but also "PUSCH".

The above-described operation examples may be combined and applied in a complex manner as long as no contradiction arises.

In the above-described disclosure, configure, activate, update, indicate, enable, specify, and select may be read as each other. Similarly, link, associate, correspond, and map may be read as each other, and allocate, assign, monitor, and map may also be read as each other.

Furthermore, specific, dedicated, UE specific, and UE dedicated may be read as each other. Similarly, common, shared, group-common, UE common, and UE shared may be read as each other.

Block diagrams used in the explanation of the above embodiment show blocks in function units. Those functional blocks (structural components) can be realized by a desired combination of at least one of hardware and software. Means for realizing each functional block is not particularly limited. That is, each functional block may be realized by one device combined physically or logically. Two or more devices separated physically or logically may be directly or indirectly connected (for example, wired, or wireless) to realize each functional block. The functional block may be realized by combining software with the one device or the plurality of devices.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that functions transmission is called a transmitting unit or a transmitter. As described above, the method of realization of both is not particularly limited.

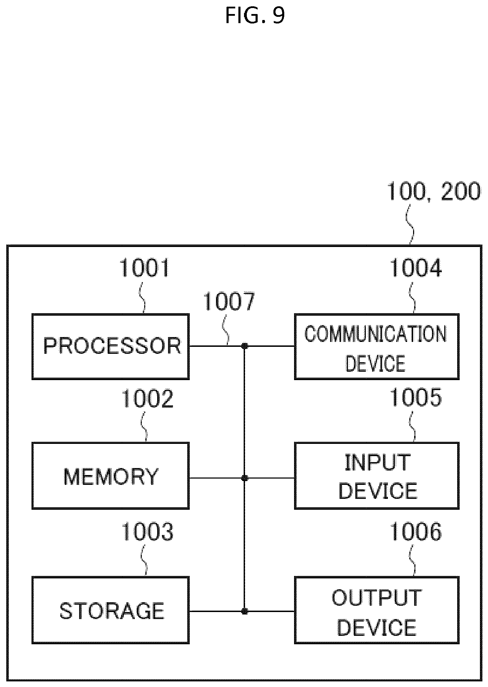

Furthermore, the above-described gNB 100 and UE 200 (the apparatus) may function as a computer that performs the processing of the radio communication method of the present disclosure. Fig. 9 is a diagram showing an example of the hardware configuration of the apparatus. As shown in Fig. 9, the apparatus may be configured as a computer apparatus including a processor 1001, a memory 1002, a storage 1003, a communication device 1004, an input device 1005, an output device 1006, a bus 1007, and the like.

Note that in the following description, the term "apparatus" can be replaced with a circuit, device, unit, or the like. The hardware configuration of the apparatus may include one or a plurality of the devices shown in the figure, or may not include some of the devices.

Each functional block of the apparatus (Figs. 4 and 5) is realized by any hardware element of the computer apparatus or a combination of the hardware elements.

Also, each function in the apparatus is realized by loading predetermined software (program) on hardware such as the processor 1001 and the memory 1002 so that the processor 1001 performs computation to control communication by the communication device 1004 or to control at least one of reading and writing of data in the memory 1002 and the storage 1003.

The processor 1001 operates an operating system to control the entire computer, for example. The processor 1001 may be composed of a central processing unit (CPU) including an interface with peripheral devices, a control device, an arithmetic device, a register, and the like.

Also, the processor 1001 reads a program (program code), a software module, data, and the like from the storage 1003 and/or the communication device 1004 to the memory 1002 and performs various types of processing according to the program (program code), the software module, the data, and the like. As the program, a program for causing the computer to perform at least a part of the operation described in the above embodiments is used. Furthermore, the above-described various operations may be performed by the single processor 1001 or may be performed by two or more processors 1001 simultaneously or sequentially. The processor 1001 may be implemented by one or more chips. Note that the program may be transmitted from a network via a telecommunication line.

The memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). The memory 1002 may be called a register, a cache, a main memory (main storage device), or the like. The memory 1002 can save a program (program code), a software module, and the like that can be executed to perform the method according to one embodiment of the present disclosure.

The storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The storage 1003 may be called an auxiliary storage device. The recording medium described above may be, for example, a database, a server, or other appropriate media including the memory 1002 and/or the storage 1003.

The communication device 1004 is hardware (transmission/reception device) for communicating between computers via a wired and/or wireless network and is also called, for example, a network device, a network controller, a network card, or a communication module.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, or a sensor) that accepts input from the outside. The output device 1006 is an output device (for example, a display, a speaker, or an LED lamp) that outputs data to the outside. Note that the input device 1005 and the output device 1006 may be integrated (for example, a touch panel).

Also, each device such as the processor 1001 and the memory 1002 is connected by a bus 1007 for communicating information. The bus 1007 may be composed of a single bus or may be composed of different buses for each device.

Furthermore, the apparatus may include hardware such as a microprocessor, a digital signal processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented by using at least one of these hardware.

Also, notification of information is not limited to the aspect/embodiment described in the present disclosure, but may be performed by other methods. For example, notification of information may be performed by physical layer signaling (for example, Downlink Control Information (DCI), Uplink Control Information (UCI)), higher layer signaling (for example, RRC signaling, Medium Access Control (MAC) signaling), broadcast information (Master Information Block (MIB), System Information Block (SIB)), other signals, or combinations thereof. RRC signaling may be also called an RRC message, for example, an RRC connection setup message, an RRC connection reconfiguration message, or the like.

Each aspect/embodiment described in the present disclosure may be applied to a system that uses Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), other appropriate systems, and/or a next-generation system extended based on these. Also, a plurality of systems may be combined (for example, a combination of at least one of LTE and LTE-A with 5G) and applied.

The processing procedures, sequences, flowcharts, and the like of each aspect/embodiment described in the present disclosure may be reordered as long as there is no contradiction. For example, regarding the methods described in the present disclosure, elements of various steps are presented using an illustrative order, and are not limited to the specific order presented.

Specific operations performed by the base station in the present disclosure may be performed by an upper node thereof in some cases. In a network including one or more network nodes having a base station, it is obvious that various operations performed for communication with a terminal can be performed by the base station and/or other network nodes (for example, MME or S-GW may be cited, but not limited thereto) other than the base station. Although the case where there is one network node other than the base station is illustrated above, a combination of a plurality of other network nodes (for example, MME and S-GW) may be used.

Information, signals (information, etc.) may be output from a higher layer (or a lower layer) to a lower layer (or a higher layer). Information, etc. may be input and output via a plurality of network nodes.

Input/output information may be stored in a specific location (for example, a memory) or may be managed using a management table. Input/output information may be overwritten, updated, or added. Output information may be deleted. Input information may be transmitted to other devices.

Determination may be performed by a value represented by 1 bit (0 or 1), may be performed by a Boolean value (Boolean: true or false), or may be performed by comparison of numerical values (for example, comparison with a predetermined value).

Each aspect/embodiment described in the present disclosure may be used alone, may be used in combination, or may be switched in accordance with execution. Also, notification of predetermined information (for example, notification of "being X") is not limited to being performed explicitly, but may be performed implicitly (for example, not notifying the predetermined information).

Software should be interpreted broadly to mean instructions, instruction sets, codes, code segments, program codes, programs, subprograms, software modules, applications, software applications, software packages, routines, subroutines, objects, executable files, execution threads, procedures, functions, and the like, regardless of whether it is called software, firmware, middleware, microcode, hardware description language, or other names.

Also, software, instructions, information, etc. may be transmitted and received via a transmission medium. For example, when software is transmitted from a website, a server, or other remote sources using at least one of wired technology (coaxial cable, fiber optic cable, twisted pair, Digital Subscriber Line (DSL), etc.) and wireless technology (infrared, microwave, etc.), at least one of these wired technology and wireless technology is included within the definition of the transmission medium.

Information, signals, etc. described in the present disclosure may be represented using any of various different technologies. For example, data, instructions, commands, information, signals, bits, symbols, chips, etc. that may be referred to throughout the above description may be represented by voltage, current, electromagnetic waves, magnetic fields or magnetic particles, optical fields or photons, or any combination thereof.

Note that terms described in the present disclosure and terms necessary for understanding the present disclosure may be replaced with terms having the same or similar meanings. For example, at least one of a channel and a symbol may be a signal (signaling). Also, a signal may be a message. Also, a component carrier (CC) may be called a carrier frequency, a cell, a frequency carrier, or the like.

The terms "system" and "network" used in the present disclosure are used interchangeably.

Also, information, parameters, etc. described in the present disclosure may be represented using absolute values, may be represented using relative values from predetermined values, or may be represented using other corresponding information. For example, radio resources may be indicated by an index.

The names used for the parameters described above are not limited names in any respect. Furthermore, formulas and the like using these parameters may differ from those explicitly disclosed in the present disclosure. Since various channels (for example, PUCCH, PDCCH, etc.) and information elements can be identified by any suitable names, various names assigned to these various channels and information elements are not limited names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably. The base station may be called by terms such as a macro cell, a small cell, a femto cell, and a pico cell.

A base station can accommodate one or more (for example, three) cells (also called sectors). When a base station accommodates a plurality of cells, the entire coverage area of the base station can be divided into a plurality of smaller areas, and each smaller area can provide communication services by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, terms such as "Mobile Station (MS)", "user terminal", "User Equipment (UE)", and "terminal" may be used interchangeably.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be called a transmission device, a reception device, a communication device, or the like. Note that at least one of the base station and the mobile station may be a device mounted on a moving body, the moving body itself, or the like. The moving body may be a vehicle (for example, a car, an airplane, etc.), a moving body that moves unmanned (for example, a drone, an autonomous vehicle, etc.), or a robot (manned or unmanned). Note that at least one of the base station and the mobile station includes a device that does not necessarily move during communication operation. For example, at least one of the base station and the mobile station may be an Internet of Things (IoT) device such as a sensor.

Also, the base station in the present disclosure may be read as a mobile station (user terminal, hereinafter the same). For example, each aspect/embodiment of the present disclosure may be applied to a configuration in which communication between a base station and a mobile station is replaced with communication between a plurality of mobile stations (for example, may be called Device-to-Device (D2D), Vehicle-to-Everything (V2X), etc.). In this case, the mobile station may have the functions of the base station. Also, words such as "uplink" and "downlink" may be replaced with words corresponding to terminal-to-terminal communication (for example, "side"). For example, an uplink channel, a downlink channel, etc. may be replaced with a side channel.

Similarly, the mobile station in the present disclosure may be read as a base station. In this case, the base station may have the functions of the mobile station.

A radio frame may be composed of one or more frames in the time domain. Each of the one or more frames in the time domain may be called a subframe.

A subframe may be further composed of one or more slots in the time domain. A subframe may be a fixed time length (for example, 1 ms) that does not depend on numerology.

Numerology may be a communication parameter applied to at least one of transmission and reception of a certain signal or channel. Numerology may indicate at least one of, for example, SubCarrier Spacing (SCS), bandwidth, symbol length, cyclic prefix length, Transmission Time Interval (TTI), number of symbols per TTI, radio frame configuration, specific filtering processing performed by a transceiver in the frequency domain, specific windowing processing performed by a transceiver in the time domain, and the like.

A slot may be composed of one or more symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini-slots. Each mini-slot may be composed of one or more symbols in the time domain. Also, a mini-slot may be called a sub-slot. A mini-slot may be composed of fewer symbols than a slot. PDSCH (or PUSCH) transmitted in a time unit larger than a mini-slot may be called PDSCH (or PUSCH) mapping type A. PDSCH (or PUSCH) transmitted using a mini-slot may be called PDSCH (or PUSCH) mapping type B.

Radio frame, subframe, slot, mini-slot and symbol all represent a time unit when transmitting a signal. Radio frame, subframe, slot, mini-slot and symbol may be called by other names corresponding to them.

For example, one subframe may be called a transmission time interval (TTI), a plurality of consecutive subframes may be called a TTI, or one slot or one mini-slot may be called a TTI. That is, at least one of the subframe and the TTI may be a subframe (1 ms) in the existing LTE, may be a period shorter than 1 ms (for example, 1 to 13 symbols), or may be a period longer than 1 ms. Note that the unit representing the TTI may be called a slot, a mini-slot, or the like instead of a subframe.

Here, TTI refers to, for example, the minimum time unit of scheduling in radio communication. For example, in the LTE system, the base station performs scheduling to allocate radio resources (frequency bandwidth, transmission power, etc. usable in each user terminal) to each user terminal in units of TTI. Note that the definition of TTI is not limited to this.

TTI may be a transmission time unit of a channel-encoded data packet (transport block), code block, codeword, etc., or may be a processing unit of scheduling, link adaptation, etc. Note that when a TTI is given, a time interval (for example, the number of symbols) in which a transport block, a code block, a codeword, etc. is actually mapped may be shorter than the TTI.

Note that when one slot or one mini-slot is called a TTI, one or more TTIs (that is, one or more slots or one or more mini-slots) may be the minimum time unit of scheduling. Also, the number of slots (number of mini-slots) constituting the minimum time unit of scheduling may be controlled.

A TTI having a time length of 1 ms may be called a normal TTI (TTI in LTE Rel. 8-12), a normal TTI, a long TTI, a normal subframe, a normal subframe, a long subframe, a slot, or the like. A TTI shorter than the normal TTI may be called a shortened TTI, a short TTI, a partial or fractional TTI, a shortened subframe, a short subframe, a mini-slot, a sub-slot, a slot, or the like.

Note that a long TTI (for example, a normal TTI, a subframe, etc.) may be replaced with a TTI having a time length exceeding 1 ms, and a short TTI (for example, a shortened TTI, etc.) may be replaced with a TTI having a TTI length less than the TTI length of the long TTI and 1 ms or more.

A resource block (RB) is a resource allocation unit in the time domain and the frequency domain, and may include one or a plurality of continuous subcarriers in the frequency domain. The number of subcarriers included in an RB may be the same regardless of numerology, for example, 12. The number of subcarriers included in an RB may be determined based on numerology.

Also, the time domain of an RB may include one or a plurality of symbols, and may be a length of one slot, one mini-slot, one subframe, or one TTI. One TTI, one subframe, etc. may be each composed of one or a plurality of resource blocks.

Note that one or more RBs may be called a Physical Resource Block (Physical RB: PRB), a Sub-Carrier Group (SCG), a Resource Element Group (REG), a PRB pair, an RB pair, or the like.

Also, a resource block may be composed of one or more Resource Elements (RE). For example, one RE may be a radio resource region of one subcarrier and one symbol.

Bandwidth Part (BWP) (may be called partial bandwidth, etc.) may represent a subset of continuous common RBs (common resource blocks) for a certain numerology in a certain carrier. Here, the common RB may be identified by an index of an RB based on a common reference point of the carrier. A PRB may be defined in a certain BWP and numbered within the BWP.

BWP may include BWP for UL (UL BWP) and BWP for DL (DL BWP). One or a plurality of BWPs may be configured within one carrier for the UE.

At least one of the configured BWPs may be active, and the UE does not have to assume transmission/reception of a predetermined signal/channel outside the active BWP. Note that "cell", "carrier", etc. in the present disclosure may be replaced with "BWP".

Structures such as radio frame, subframe, slot, mini-slot and symbol described above are merely examples. For example, configurations such as the number of subframes included in a radio frame, the number of slots per subframe or radio frame, the number of mini-slots included in a slot, the number of symbols and RBs included in a slot or mini-slot, the number of subcarriers included in an RB, and the number of symbols, symbol length, Cyclic Prefix (CP) length, etc. in a TTI can be changed in various ways.

The terms "connected", "coupled", or any variation thereof, mean any direct or indirect connection or coupling between two or more elements, and can include the presence of one or more intermediate elements between two elements that are "connected" or "coupled" to each other. The coupling or connection between the elements may be physical, logical, or a combination thereof. For example, "connection" may be replaced with "access". As used in the present disclosure, two elements can be considered to be "connected" or "coupled" to each other using at least one of one or more wires, cables, and printed electrical connections, and as some non-limiting and non-inclusive examples, using electromagnetic energy having wavelengths in the radio frequency region, the microwave region, and the light (both visible and invisible) region.

Reference signal can be abbreviated as RS (Reference Signal), and may be called a pilot (Pilot) depending on the standard to be applied.

The description "based on" used in the present disclosure does not mean "based only on" unless explicitly stated otherwise. In other words, the description "based on" means both "based only on" and "based at least on".

"Means" in the configuration of each device above may be replaced with "part", "circuit", "device", etc.

Any reference to elements using designations such as "first", "second" used in the present disclosure does not generally limit the quantity or order of those elements. These designations can be used in the present disclosure as a convenient method for distinguishing between two or more elements. Therefore, references to the first and second elements do not imply that only two elements can be adopted there or that the first element must precede the second element in some way.

In the present disclosure, when "include", "including", and variations thereof are used, these terms are intended to be inclusive, similar to the term "comprising". Furthermore, the term "or" used in the present disclosure is intended not to be an exclusive disjunction.

In the present disclosure, for example, when articles such as a, an, and the in English are added by translation, the present disclosure may include that the noun following these articles is plural.

The terms "determining", "determining" used in the present disclosure may encompass a wide variety of operations. "Determining", "determining" may include, for example, regarding judging, calculating, computing, processing, deriving, investigating, looking up, search, inquiry (for example, looking up in a table, a database or another data structure), ascertaining as "determining", "determining". Also, "determining", "determining" may include regarding receiving (for example, receiving information), transmitting (for example, transmitting information), input, output, accessing (for example, accessing data in a memory) as "determining", "determining". Also, "determining", "determining" may include regarding resolving, selecting, choosing, establishing, comparing, etc. as "determining", "determining". That is, "determining", "determining" may include regarding some operation as "determining", "determining". Also, "determining (determining)" may be replaced with "assuming", "expecting", "considering", etc.

In the present disclosure, the term "A and B are different" may mean "A and B are different from each other". Note that the term may mean "A and B are each different from C". Terms such as "separate", "coupled" may be interpreted in the same way as "different".

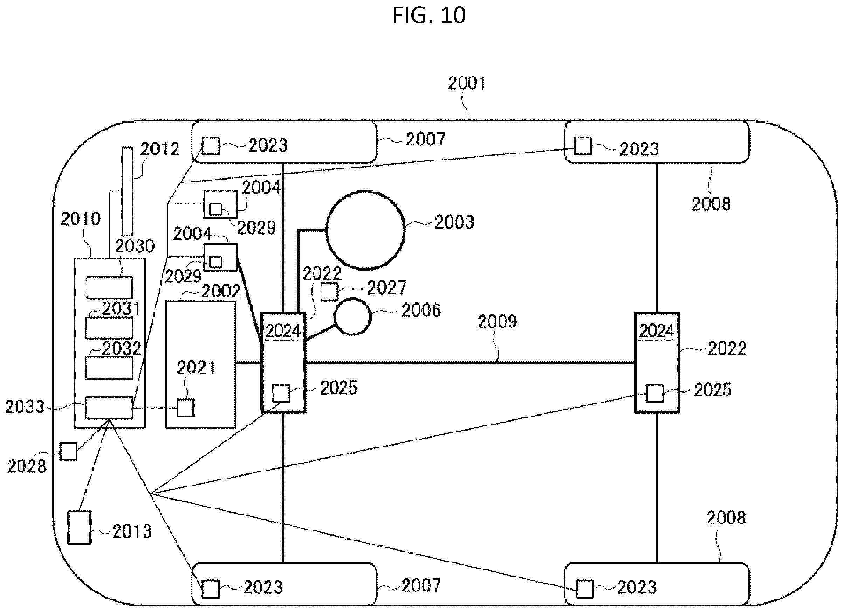

Fig. 10 shows an example of configuration of a vehicle 2001. As shown in Fig. 10, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is configured by, for example, an engine, a motor, or a hybrid of an engine and a motor.

The steering unit 2003 includes at least a steering wheel (also called a handle), and is configured to steer at least one of the front wheels and the rear wheels based on the operation of the steering wheel by a user.

The electronic control unit 2010 is configured by a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be called an ECU (Electronic Control Unit).

Signals from various sensors 2021 to 2028 include a current signal from a current sensor 2021 sensing a current of a motor, a rotation speed signal of front wheels or rear wheels acquired by a rotation speed sensor 2022, an air pressure signal of front wheels or rear wheels acquired by an air pressure sensor 2023, a vehicle speed signal acquired by a vehicle speed sensor 2024, an acceleration signal acquired by an acceleration sensor 2025, a depression amount signal of an accelerator pedal acquired by an accelerator pedal sensor 2029, a depression amount signal of a brake pedal acquired by a brake pedal sensor 2026, an operation signal of a shift lever acquired by a shift lever sensor 2027, a detection signal for detecting an obstacle, a vehicle, a pedestrian, etc. acquired by the object detection sensor 2028, and the like.

The information service unit 2012 is configured by various devices such as a car navigation system, an audio system, a speaker, a television, and a radio for providing various information such as driving information, traffic information, and entertainment information, and one or more ECUs controlling these devices. The information service unit 2012 provides various multimedia information and multimedia services to an occupant of the vehicle 2001 using information acquired from an external device via the communication module 2013 or the like.

The driving assistance system unit 2030 is configured by various devices such as a millimeter wave radar, LiDAR (Light Detection and Ranging), a camera, a positioning locator (for example, GNSS, etc.), map information (for example, High Definition (HD) map, Automated Vehicle (AV) map, etc.), a gyro system (for example, IMU (Inertial Measurement Unit), INS (Inertial Navigation System), etc.), an AI (Artificial Intelligence) chip, and an AI processor for providing functions to prevent accidents in advance or reduce driving load of a driver, and one or more ECUs controlling these devices. Also, the driving assistance system unit 2030 transmits and receives various information via the communication module 2013 to realize a driving support function or an automated driving function.

The communication module 2013 can communicate with the microprocessor 2031 and components of the vehicle 2001 via a communication port. For example, the communication module 2013 transmits and receives data to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001 via the communication port 2033.

The communication module 2013 is a communication device capable of being controlled by the microprocessor 2031 of the electronic control unit 2010 and capable of communicating with an external device. For example, it transmits and receives various information to and from an external device via radio communication. The communication module 2013 may be inside or outside the electronic control unit 2010. The external device may be, for example, a base station, a mobile station, or the like.

The communication module 2013 transmits a current signal from the current sensor input to the electronic control unit 2010 to an external device via radio communication. Also, the communication module 2013 transmits signals input to the electronic control unit 2010, such as the rotation speed signal of front wheels or rear wheels acquired by the rotation speed sensor 2022, the air pressure signal of front wheels or rear wheels acquired by the air pressure sensor 2023, the vehicle speed signal acquired by the vehicle speed sensor 2024, the acceleration signal acquired by the acceleration sensor 2025, the depression amount signal of the accelerator pedal acquired by the accelerator pedal sensor 2029, the depression amount signal of the brake pedal acquired by the brake pedal sensor 2026, the operation signal of the shift lever acquired by the shift lever sensor 2027, the detection signal for detecting an obstacle, a vehicle, a pedestrian, etc. acquired by the object detection sensor 2028, and the like to an external device via radio communication.

The communication module 2013 receives various kinds of information (traffic information, signal information, Inter-vehicular distance information, etc.) transmitted from an external device and displays them to the information service unit 2012 provided in the vehicle. The communication module 2013 also stores various information received from external devices in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like provided in the vehicle 2001.

Although the present disclosure has been described in detail, it is obvious to those skilled in the art that the present disclosure is not limited to the embodiments described in the present disclosure. The present disclosure can be implemented as modifications and variations without departing from the spirit and scope of the present disclosure defined by the description of the claims. Therefore, the description of the present disclosure is for the purpose of illustration and does not have any restrictive meaning to the present disclosure.

(Supplementary Note)

The above-described disclosure may be expressed as follows.

A first aspect is a terminal comprising: a reception unit configured to receive a reference signal in a cell formed by a base station; and a control unit configured to assume that the reference signal is configured for each group in the cell, wherein the control unit assumes that the group is configured based on information related to an antenna port for receiving the reference signal.

A second aspect is the terminal according to the first aspect, wherein the control unit assumes that the group is configured based on the number of antenna ports for receiving the reference signal.

A third aspect is the terminal according to the first or second aspect, wherein the control unit assumes that a precoder applied to communication with the base station is common among terminals in the group.

A fourth aspect is the terminal according to the first or second aspect, wherein the control unit assumes that a precoder applied to communication with the base station is different among terminals in the group.

A fifth aspect is the terminal according to any one of the first to fourth aspects, wherein the reception unit receives a plurality of the reference signals, and the control unit assumes that a part of the plurality of reference signals is configured for each of the groups, and a rest of the plurality of reference signals is configured for each of the terminals.

A sixth aspect is the terminal according to the fifth aspect, wherein the control unit determines the number of antenna ports for receiving the reference signal configured for each of the terminals based on the number of antenna ports for receiving the reference signal configured for each of the groups and the total number of antenna ports.

DESCRIPTION OF REFERENCE NUMERALS

10 Radio communication system
20 NG-RAN
100 gNB
110 Radio signal transmission/reception unit
120 Control unit
200 UE
210 Radio signal transmission/reception unit
220 Amplifier unit
230 Modulation/demodulation unit
240 Control signal/reference signal processing unit
250 Encoding/decoding unit
260 Data transmission/reception unit
270 Control unit
1001 Processor

1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driving assistance system unit
2031 Microprocessor
2032 Memory (ROM, RAM)
2033 Communication port

**Claims**

1. A terminal comprising:

   a reception unit configured to receive a reference signal in a cell formed by a base station; and
   a control unit configured to assume that the reference signal is configured for each group in the cell, wherein
   the control unit assumes that the group is configured based on information related to an antenna port for receiving
   the reference signal.

2. The terminal according to claim 1, wherein the control unit assumes that the group is configured based on a number of antenna ports for receiving the reference signal.

3. The terminal according to claim 1, wherein the control unit assumes that a precoder applied to communication with the base station is common among terminals in the group.

4. The terminal according to claim 1, wherein the control unit assumes that a precoder applied to communication with the base station is different among terminals in the group.

5. The terminal according to claim 1, wherein

   the reception unit receives a plurality of the reference signals, and
   the control unit assumes that a part of the plurality of reference signals is configured for each of the groups, and a
   rest of the plurality of reference signals is configured for each of the terminals.

6. The terminal according to claim 5, wherein the control unit determines a number of antenna ports for receiving the reference signal configured for each of the terminals based on a number of antenna ports for receiving the reference signal configured for each of the groups and the total number of antenna ports.

FIG. 1

FIG. 2

FR1
{15,30,60} kHz SCS
5~100 MHz BW

FR2-1
{60,120,(240)} kHz SCS
50~400 MHz BW          FR2-2

0.41    1GHz                7.125   10GHz    24.25      52.6        71GHz   100GHz
GHz                        GHz              GHz        GHz

f

EP 4 783 701 A1

# FIG. 3

FIG. 4

FIG. 5

# FIG. 6

100

Cell specific RS

200

Cell ID#1

100

Group specific RS

Group specific RS

200

Group ID#1
(e.g., 1port RS)

Cell ID#1

Group ID#2
(e.g., 2port RS)

# FIG. 7

Cell specific RS

100

200

Cell ID#1

100

Cell specific RS

Cell specific RS

200

Cell ID#1
(e.g., 1port RS)

Cell ID#2
(e.g., 2port RS)

FIG. 8

| Number of antenna ports (layers) | Number of ports of group specific RS | Number of ports of UE specific RS |
|---|---|---|
| 1 | 1 | 0 |
| 2 | 1 | 1 |
| 3 | 1 | 2 |
| ... | ... | ... |
| 4 | 4 | 0 |
| 5 | 4 | 1 |
| 6 | 4 | 2 |
| 7 | 4 | 3 |
| 8 | 4 | 4 |
| ... | ... | ... |

FIG. 9

100, 200

FIG. 10

## INTERNATIONAL SEARCH REPORT

| International application No. |
| --- |
| **PCT/JP2023/036284** |

**A. CLASSIFICATION OF SUBJECT MATTER**

*H04W 72/23*(2023.01)i
FI: H04W72/23

According to International Patent Classification (IPC) or to both national classification and IPC

**B. FIELDS SEARCHED**

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2016-518758 A (PANASONIC INTELLECTUAL PROPERTY CORPORATION OF AMERICA) 23 June 2016 (2016-06-23)<br>paragraphs [0024]-[0044], fig. 4 | 1-6 |
| A | WO 2020/090622 A1 (SHARP KABUSHIKI KAISHA) 07 May 2020 (2020-05-07)<br>paragraphs [0138]-[0192] | 1-6 |
| A | InterDigital, Inc., Further Details on DMRS Enhancements [online]. 3GPP TSG RAN WG1 #113 R1-2304424, 26 May 2023, [retrieved on 18 April 2024], Retrieved from Internet <URL: https://www.3gpp.org/ftp/tsg_ran/WG1_RL1/TSGR1_113/Docs/R1-2304424.zip><br>sections 2-3 | 1-6 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/036284**

| Patent document cited in search report | | | Publication date (day/month/year) | Patent family member(s) | | | Publication date (day/month/year) |
|---|---|---|---|---|---|---|---|
| JP | 2016-518758 | A | 23 June 2016 | US | 2016/0087709 | A1 | |
| | | | | fig. 4, paragraphs [0045]-[0080] | | | |
| | | | | WO | 2014/161141 | A1 | |
| | | | | EP | 3208949 | A1 | |
| | | | | CN | 105075144 | A | |
| WO | 2020/090622 | A1 | 07 May 2020 | US | 2022/0006582 | A1 | |
| | | | | paragraphs [0151]-[0205] | | | |
| | | | | EP | 3876597 | A1 | |
| | | | | CN | 112956234 | A | |
| | | | | JP | 2020-72372 | A | |

Form PCT/ISA/210 (patent family annex) (July 2022)

**REFERENCES CITED IN THE DESCRIPTION**

**Non-patent literature cited in the description**

- **NTT DOCOMO**. *DOCOMO 6G White Paper, Version 5.0*, 28 September 2023, https://www.docomo.ne.jp/binary/pdf/corporate/technology/whitepaper_6g/-DOCOMO_6G_ White_PaperJP_20221116.pdf